# EUROPÄISCHE PATENTSCHRIFT

(11) **EP 0 684 157 B1**
(45) Veröffentlichungstag und Bekanntmachung des Hinweises auf die Patenterteilung: **24.09.1997**
(21) Anmeldenummer: 95106415.3
(22) Anmeldetag: 28.04.1995
(51) Int. Cl.: B60R 13/02, B60J 5/04

(54) **Mehrwandige Fahrzeugtür**
Multi walled vehicle door
Porte de véhicule à structure multi paroi

(30) Priorität: 26.05.1994 DE 9408653 U
(43) Veröffentlichungstag der Anmeldung: 29.11.1995
(73) Patentinhaber: Delphi Automotive Systems Deutschland GmbH, D-42369 Wuppertal (DE)
(72) Erfinder: Schmitz, Alfons, Dipl.-Ing., D-48167 Münster (DE)
(74) Vertreter: Denton, Michael John

(56) Entgegenhaltungen:
- EP-A- 0 551 825
- DE-A- 3 502 056
- DE-A- 3 510 018
- DE-A- 3 520 479
- DE-A- 3 600 745
- DE-A- 3 808 727
- DE-C- 3 928 685

## Beschreibung

Die Erfindung geht aus von einer mehrwandigen Fahrzeugtür gemäß dem Oberbegriff des Anspruches 1.

Eine solche Fahrzeugtür ist aus der DE 3928685 C1 bekannt. Eine Trägerplatte für Konstruktionselemente deckt unter Bildung eines Türhohlraumes eine entsprechende Aussparung in der Innenwand der Fahrzeugtür ab. An einem Teil des äußeren Umfangs der Trägerplatte ist ein biegsames, strangförmiges Dichtungsprofil befestigt, daß im montierten Zustand dichtend an der Türinnenwand anliegt. Die elektrischen Konstruktionselemente sind zwischen der Türinnenwand und einer Türverkleidung angeordnet und so gegenüber Feuchtigkeitseintritt geschützt. Die Verbindung der elektrischen Konstruktionselemente mit der im Türhohlraum befindlichen Mechanik, z. B. einem Fensterheber, erfolgt durch eine Öffnung in der Trägerplatte. Diese und ähnliche Öffnungen müssen zusätzlich abgedichtet werden, damit keine Feuchtigkeit durchdringt. Folglich sind hierfür separate Dichtungen notwendig, die einerseits die Teilevielfalt erhöhen und andererseits neue mögliche Fehlerquellen bezüglich der Dichtungsqualität darstellen.

Darüber hinaus müssen alle elektrischen Komponenten an der dem Fahrzeuginnenraum zugewandten Seite der Trägerplatte angeordnet sein, um den Feuchtigkeitsschutz zu garantieren. Infolgedessen muß die Trägerplatte mit einem entsprechenden in den Türhohlraum hineinragenden Profil zur Befestigung der Konstruktionselemente ausgebildet sein. Da die Trägerplatte oftmals auch der Versteifung der Tür dient, kann unter diesem Aspekt eine spezifische Profilierung notwendig sein, die der oben genannten Anforderung entgegensteht. Die Optimierung dieser gegensätzlichen Forderungen kann zur beidseitigen Anordnung von elektrischen Komponenten führen. Dies ist jedoch mit der bekannten Fahrzeugtür unter Garantie eines Feuchtigkeitsschutzes nicht möglich.

Aus der DE 3600745 A1 ist eine Schutzvorrichtung für Autotüren bekannt, die aus einer wasserdichten Schutzfolie besteht, deren Kanten der Innenkontur der Tür entsprechen und die einen Dauerklebestreifen als Klebedichtung aufweist, der auf dem gesamten Umfangsrand der Schutzfolie verläuft. Damit ist eine umlaufende Klebedichtung zur Abdichtung des Türinnenraumes geschaffen, so daß der Eintritt von Wasser ins Fahrzeuginnere vermieden wird. Nachteilig ist hierbei, daß die im Inneren der Autotür angebrachten Konstruktionselemente feuchtigkeitsdicht ausgeführt werden müssen. Ein Fensterhebermotor für einen elektrischen Fensterheber muß gegen den unvermeidlichen Wassereintritt im Bereich des Scheibenschlitzes abgedichtet sein, und eine entsprechend aufwendige, wassergeschütze Verdrahtung in der Tür vorgesehen werden. Bei diesen konventionellen Türen erfolgt die Bestückung mit Aggregaten durch Öffnungen im Türinnenblech. Der Türhohlraum muß daher so groß sein, daß die Bestückung gewährleistet ist.

Eine weitere Schutzvorrichtung zur Abdeckung der inneren Metallfläche von Autotüren gegen von außen in den Fahrgastraum eindringende Nässe ist aus der DE 35 10 018 A1 bekannt. Ein der inneren Metallfläche angepaßter wasserundurchlässiger Kunststoffzuschnitt wird mit seinem äußeren Rand mit der Autotür verklebt. Dieser konventionelle Türaufbau erfordert weiterhin die problematische Anordnung der mechanischen und elektrischen Komponenten und deren Schnittstelle im vor Nässe ungeschützten Türinnenraum.

Der Erfindung liegt die Aufgabe zugrunde, eine mehrwandige Fahrzeugtür nach dem Oberbegriff des Anspruches 1 so zu gestalten, daß die elektrischen Aggregate und der Fahrzeuginnenraum unabhängig von der Lage der Aggregate an einem entsprechenden Träger und der Form des Trägers vor Feuchtigkeitseintritt geschützt sind.

Gelöst wird diese Aufgabe mit den im kennzeichnenden Teil des Anspruches 1 angegebenen Merkmalen.

Die erfindungsgemäße Fahrzeugtür bietet die Möglichkeit, die elektrischen Aggregate beidseitig des Aggregatträgers anzuordnen und trotzdem eine einfache und wirkungsvolle Feuchtigkeitssperre zu realisieren. Die Feuchtigkeitssperre ist einteilig und deshalb leicht handhabbar. An allen kritischen Stellen ist eine vollflächige Auflage gewährleistet, d. h. die Feuchtigkeitssperre wird sowohl in den Übergangsbereichen zwischen dem Aggregatträger und einem Versteifungsrahmen ,als auch an den Durchtrittsöffnungen zur Kopplung einzelner Aggregatteile feuchtigkeitsdicht verpreßt. Es werden dann keine separaten Dichtungen benötigt. Außerdem dient die Feuchtigkeitssperre gleichzeitig zur Dämmung von Temperaturen und Geräuschen.

Die Feuchtigkeitssperre läßt sich sowohl mit formsteifen als auch mit folienartigen Materialien realisieren. Sinnvoll sind insbesondere transparente Materialien zur einfachen optischen Kontrolle der darunterliegenden Aggregate. Die Formstabilität ist dann von Vorteil, wenn gleichzeitig Vorrichtungen an der Feuchtigkeitssperre ausgebildet sind, die der Befestigung am Aggregatträger dienen oder durch die, die Lage einzelner Aggregate festgelegt werden soll. Eine solche formsteife Feuchtigkeitssperre ist während der Montage leicht zu handhaben. Folien dagegen sind leicht herstellbar und deshalb billig.

Die Materialauswahl ist darüber hinaus von der Art der Befestigungsmethode abhängig. Besonders vorteilhaft sind natürlich Verfahren, die für Reparaturzwecke ein zerstörungsfreies Entfernen und ein wiederholtes Befestigen der Feuchtigkeitssperre ermöglichen. Bei formsteifem Material ist daher eine Verrastung mittels entsprechender Vorrichtungen oder ein Klebeverfahren praktikabel. Für Folien ist neben dem konventionellen Kleben, ein Bedampfungs-, Schrumpfungs- oder Schäumungsprozess denkbar, wobei das jedoch nur die einmalige Nutzung der Feuchtigkeitssperre bedingt. Für diese Verfahren sprechen die geringen Herstellkosten.

Der Vorteil der Anordnung der Feuchtigkeitssperre an der dem Türhohlraum zugewandten Außenseite des Aggregatträgers ist die Unabhängigkeit von der Lage der Aggregate und damit von der Form des Aggregatträgers. Um eine möglichst raumsparende und effektive Anordnung der einzelnen Aggregate und deren Verbindungswege zu erreichen, ist der Aggregatträger dreidimensional mit Durchbrüchen und beidseitig angeordneten Nischen für die Aggregate ausgebildet. In die Formgestaltung gehen außerdem ergonomische und prozeßtechnische Gesichtspunkte ein. Darüber hinaus kann mit einem solchen Aggregatträger unter Optimierung des Profils die Stabilität der Tür erhöht werden. Im Falle eines seitlichen Aufpralles auf die Tür werden die Belastungen in vorteilhafter Weise gedämpft bzw. abgefangen. Die Modulfertigung einer Tür, insbesondere eines Aggregatträgers, kann in zwei unterschiedlichen Abläufen erfolgen. Bei der beidseitigen Bestückung des Aggregatträgers mit Aggregaten kann die Feuchtigkeitssperre erst nach dem Anbringen der Aggregate aufgebracht werden, damit die Aggregate innerhalb des feuchtigkeitsgeschützen Raumes angeordnet sind. Eine einseitige Bestückung ist ebenfalls nach dem obigen Verfahren möglich. Außerdem besteht die Möglichkeit, die Feuchtigkeitssperre vor der Bestückung des Aggregatträgers aufzubringen, und zwar dann, wenn der Aggregatträger in einem Verfahrensschritt hergestellt und mit der Feuchtigkeitssperre versehen wird. Voraussetzung ist hierfür allerdings, daß dieser Aggregatträger materialspezifisch geeignet ist, die Abdichtung der Durchtrittsöffnungen zu mechanischen Teilen und die Abdichtung des Übergangsbereiches zwischen Aggregatträger und Versteifungsrahmen nur durch Verpressen zu gewährleisten.

Die Erfindung wird nun anhand eines Ausführungsbeispieles unter Zuhilfenahme der Zeichnungen erläutert. Es zeigen:
- Figur 1: einen Längsschnitt durch eine Fahrzeugtür mit montiertem Aggregatträger.
- Figur 2: einen vergrößterten Teilschnitt aus Figur 1 im Bereich des Fensterhebermotors.

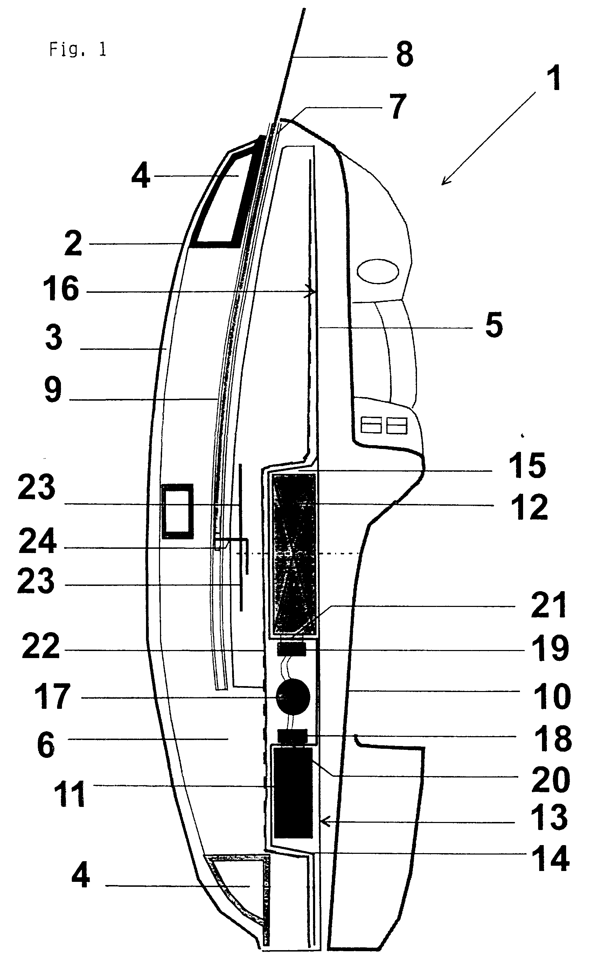

Die in Figur 1 dargestellte mehrwandige Fahrzeugtür 1 besteht aus einem leichtgewölbtem Türaußenblech 2, daß an seiner Innenseite 3 von einem Versteifungsrahmen 4 umgeben ist. Ein Aggregatträger 5 ist in diesem Versteifungsrahmen 4 eingepaßt, so daß zwischen dem Türaußenblech 2 und dem Aggregatträger 5 ein Türhohlraum 6 entsteht. In einem Scheibenschlitz 7 des Versteifungsrahmens 4 ist eine Fensterscheibe 8 eingelassen, die in einer in dem Türhohlraum 6 angeordneten Scheibenführung 9 bewegbar ist. Eine Türinnenverkleidung 10 überdeckt den Aggregatträger 5 und darauf angeordnete Aggregate, wie einen Zentralverriegelungsmotor 11 und einen Fensterhebermotor 12.

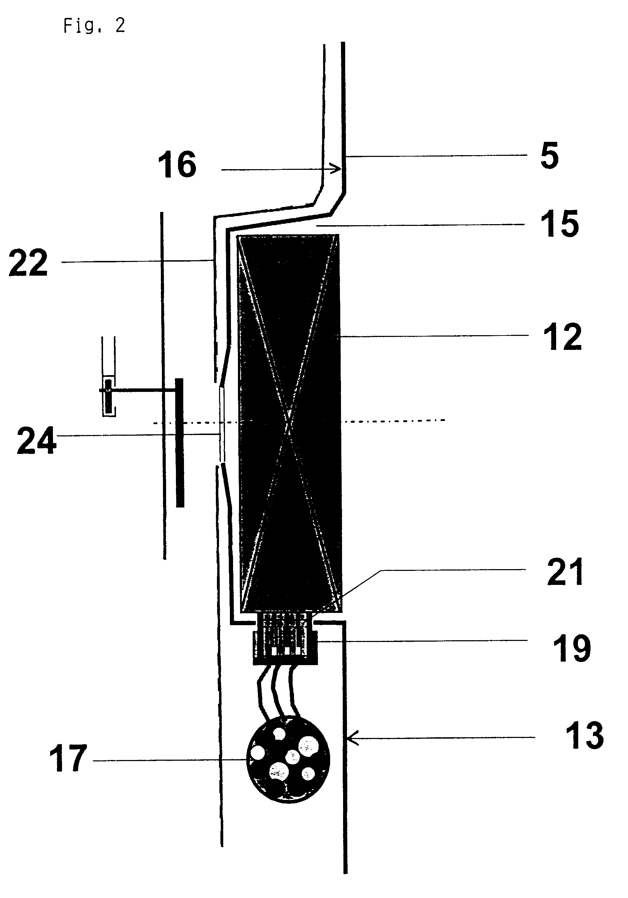

Der Aggregatträger 5 ist in diesem Ausführungsbeispiel aus profiliertem Blech hergestellt. Weitere denkbare, insbesondere leichte, Materialien sind Magnesium und verschiedene Kunststoffe, die trotz ihrer Gewichtsvorteile eine genügende Formsteife aufweisen. Der Zentralverriegelungsmotor 11 und der Fensterhebermotor 12 werden von der Innenseite 13 her in entsprechende Nischen 14 und 15 des Aggregatträgers 5 montiert. An der dem Türhohlraum 6 zugewandten Außenseite 16 des Aggregatträgers 5 ist ein Leitungssatz 17 befestigt, der u. a. die elektrische Versorgung des Zentralverriegelungsmotors 11 und des Fensterhebermotors 12 sicher stellt (Figur 2). Entsprechende Steckverbidungen 18 und 19 greifen durch Öffnungen 20 und 21 in den Nischen 14 und 15. In diesem Zustand wird eine Feuchtigkeitssperre 22 in Form einer thermoplatischen Folie auf die Außenseite 16 des Aggregatträgers 15 aufgebracht. Die Feuchtigkeitssperre 22 liegt flächig an der profilierten Außenseite 16 und dem Leitungssatz 17 an. Die Profilierung des Aggregatträgers 5 hat neben der Befestigungsfunktion für die Aggregate noch die weitere Funktion der Türversteifung, da insbesondere eine dreidimensionale Formgebung geeignet ist, die Stabilität zu erhöhen. Im Fall eines Seitenaufpralles werden die dynamischen und statischen Belastungen aufgefangen. Der Leitungssatz 17 und die Öffnungen 20 und 21 sind von der Folie abgedeckt. Anschließend wird eine sogenannte Fensterheberschere 23 an dem Aggregatträger 5 befestigt, wobei die Kopplung der Mechanik mit dem Fensterhebermotor 12 durch eine Öffnung 24 erfolgt. Die Dichtigkeit wird hierbei dadurch gewährleistet, daß die Befestigung der Fensterheberschere unter einer Verpressung der Feuchtigkeitssperre 22 zwischen dem Aggregatträger 5 und der Fensterheberschere 23 realisiert ist. Demzufolge wird ein Wassereintritt verhindert und es wird keine zusätzlich Dichtung benötigt.

Die Scheibenführung 9 wird mit eingefahrener Fensterscheibe 10 anschließend an dem Aggregatträger 5 montiert, so daß ein Aggregatträger 5 entsteht, der als vormontiertes Modul an den Versteifungsrahmen 4 befestigt wird. Die Zentrierung der Fensterscheibe 8 in dem Scheibenschlitz 7 wird während des Zusammensetzen von dem Aggregatträger 5 mit dem Türaußenblech 2 durchgeführt. Mit der Montage der Türinnenverkleidung 10 wird die Türfertigung beendet. Die Verwendung eines solchen Modules hat eine Verringerung des Türhohlraumes zur Folge, da die konventionelle Bestückung durch Öffnungen im Türinnenblech entfällt. Der Fahrzeuginnenraum kann daher bei gleichbleibender Fahrzeugbreite breiter werden.

### Bezugszeichenliste

- 1: Fahrzeugtür
- 2: Türaußenblech
- 3: Innenseite
- 4: Versteifungsrahmen
- 5: Aggregatträger
- 6: Türhohlraum
- 7: Scheibenschlitz
- 8: Fensterscheibe
- 9: Scheibenführung
- 10: Türinnenverkleidung
- 11: Zentralverriegelungsmotor
- 12: Fensterhebermotor
- 13: Innenseite des Aggregatträgers 5
- 14: Nische
- 15: Nische
- 16: Außenseite des Aggregatträgers 5
- 17: Leitungssatz
- 18: Steckverbindung
- 19: Steckverbindung
- 20: Öffnung
- 21: Öffnung
- 22: Feuchtigkeitssperre
- 23: Fensterheberschere
- 24: Öffnung

## Patentansprüche

1. Mehrwandige Fahrzeugtür aus
- einem Türaußenblech (2),
- einem modularen Aggregatträger (5), der unter Bildung eines Türhohlraumes (6) an dem Türaußenblech (2) befestigt ist,
- einer Fensterscheibe (8), die zwischen dem Türaußenblech (2) und dem Aggregatträger (5) in dem Türhohlraum (6) geführt ist,
- verschiedenen elektrischen Aggregaten (11,12), die an dem Aggregatträger (5) angeordnet sind, und
- einer Türinnenverkleidung (10), die an der dem Türhohlraum (6) abgewandten Innenseite (13) des Aggregatträgers (5) befestigbar ist,
dadurch gekennzeichnet,
- daß die elektrischen Aggregate (11,12) an der dem Türhohlraum (6) zugewandten Außenseite (16) des Aggregatträgers (5) und/oder an der Innenseite (13) des Aggregatträgers (5) angeordnet sind, und
- daß die Außenseite (16) des Aggregatträgers (5) von einer schichtartigen Feuchtigkeitssperre (22) überdeckt ist, so daß die Aggregate (11,12) und der Aggregatträger (5) gegenüber dem Türhohlraum (6) abgedichtet sind.

2. Mehrwandige Fahrzeugtür nach Anspruch 1, dadurch gekennzeichnet, daß die Feuchtigkeitssperre (22) aus formsteifem Material besteht.

3. Mehrwandige Fahrzeugtür nach Anspruch 1, dadurch gekennzeichnet, daß die Feuchtigkeitssperre (22) aus einer Folie besteht.

4. Mehrwandige Fahrzeugtür nach einem der Ansprüche 1 bis 3, dadurch gekennzeichnet, daß die Feuchtigkeitssperre (22) auf den Aggregatträger (5) geklebt ist.

5. Mehrwandige Fahrzeugtür nach einem der Anprüche 1 bis 3, dadurch gekennzeichnet, daß die Feuchtigkeitssperre (22) auf den Aggregatträger (5) gedampft ist.

6. Mehrwandige Fahrzeugtür nach einem der Ansprüche 1 - 3, dadurch gekennzeichnet, daß die Feuchtigkeitssperre (22) auf den Aggregatträger (5) geschäumt ist.

7. Mehrwandige Fahrzeugtür nach einem der Ansprüche 1 bis 6, dadurch gekennzeichnet, daß der Aggregatträger (5) und/oder die Feuchtigkeitssperre (22) profiliert ausgebildet sind.

8. Mehrwandige Fahrzeugtür nach einem der Ansprüche 1 bis 7, dadurch gekennzeichnet, daß der Aggregatträger (5) vor dem Aufbringen der Feuchtigkeitssperre (22) mit Aggregaten (11, 12) bestückbar ist.

9. Mehrwandige Fahrzeugtür nach einem der Ansprüche 1 bis 7, dadurch gekennzeichnet, daß der Aggregatträger (5) nach der Aufbringung der Feuchtigkeitssperre (22) mit Aggregaten (11, 12) bestückbar ist.

## Claims

1. Multi-panel vehicle door consisting of
- an outside door panel (2),
- a modular unit carrier (5) which is attached to the outside door panel (2), forming a door cavity (6),
- a window pane (8) which is guided between the outside door panel (2) and the unit carrier (5) in the door cavity (6),
- various electrical units (11, 12) which are arranged on the unit carrier (5), and
- a door lining (10) which can be attached to the inner side (13) of the unit carrier (5) facing away from the door cavity (6),
characterised
- in that the electrical units (11, 12) are arranged on the outer side (16) of the unit carrier (5) facing towards the door cavity (6) and/or on the inner side (13) of the unit carrier (5), and
- in that the outer side (16) of the unit carrier (5) is covered by a coating-like moisture barrier (22), so that the units (11, 12) and the unit carrier (5) are sealed off from the door cavity (6).

2. Multi-panel vehicle door according to claim 1, characterised in that the moisture barrier (22) consists of dimensionally stable material.

3. Multi-panel vehicle door according to claim 1, characterised in that the moisture barrier (22) consists of a foil.

4. Multi-panel vehicle door according to any of claims 1 to 3, characterised in that the moisture barrier (22) is adhered to the unit carrier (5).

5. Multi-panel vehicle door according to any of claims 1 to 3, characterised in that the moisture barrier (22) is applied to the unit carrier (5) by vapour deposition.

6. Multi-panel vehicle door according to any of claims 1 to 3, characterised in that the moisture barrier (22) is foamed onto the unit carrier (5).

7. Multi-panel vehicle door according to any of claims 1 to 6, characterised in that the unit carrier (5) and/or the moisture barrier (22) is of profiled construction.

8. Multi-panel vehicle door according to any of claims 1 to 7, characterised in that the unit carrier (5) can be equipped with units (11, 12) before application of the moisture barrier (22).

9. Multi-panel vehicle door according to any of claims 1 to 7, characterised in that the unit carrier (5) can be equipped with units (11, 12) after application of the moisture barrier (22).

## Revendications

1. Porte de véhicule à parois multiples constituée par
- une tôle extérieure de porte (2),
- un support modulaire d'unités (5), qui est fixé à la tôle extérieure (2) de la porte avec formation d'une cavité de porte (6),
- une vitre de fenêtre (8), qui est guidée entre la tôle extérieure (2) de la porte et le support d'unités (5) dans la cavité de porte (6),
- différentes unités électriques (11,12), qui sont disposées sur le support d'unités (5), et
- un habillage intérieur (10) de porte, qui peut être fixé sur la face intérieure (13), située à l'opposé de la cavité de porte (6), du support d'unités (5),
caractérisée en ce
- que les unités électriques (11,12) sont disposées sur la face extérieure (16), tournée vers la cavité de porte (6), du support d'unités (5) et/ou sur la face intérieure (13) du support d'unités (5), et
- que la face extérieure (16) du support d'unités (5) est recouverte par un élément en forme de couche (22) formant écran contre l'humidité, de sorte que les unités (11,12) et le support d'unités (5) sont fermés de façon étanche vis-à-vis de la cavité de porte (6).

2. Porte de véhicule à parois multiples selon la revendication 1, caractérisée en ce que l'élément (22) formant écran contre l'humidité est réalisé en un matériau de forme rigide.

3. Porte de véhicule à parois multiples selon la revendication 1, caractérisée en ce que l'élément (22) formant écran contre l'humidité est constitué par une feuille.

4. Porte de véhicule à parois multiples selon l'une des revendications 1 à 3, caractérisée en ce que l'élément (22) formant écran contre l'humidité est collé sur le support d'unités (5).

5. Porte de véhicule à parois multiples selon l'une des revendications 1 à 3, caractérisée en ce que l'élément (22) formant écran contre l'humidité est formé par dépôt à partir de vapeur sur le support d'unités (5).

6. Porte de véhicule à parois multiples selon l'une des revendications 1-3, caractérisée en ce que l'élément (22) formant écran contre l'humidité est formé par moussage sur le support d'unités (5).

7. Porte de véhicule à parois multiples selon l'une des revendications 1 à 6, caractérisée en ce que le support d'unités (5) et/ou l'élément (22) formant écran contre l'humidité sont agencés avec une forme profilée.

8. Porte de véhicule à parois multiples selon l'une des revendications 1 à 7, caractérisée en ce que le support d'unités (5) peut être équipé d'unités (11,12) avant la mise en place de l'élément (22) formant écran contre l'humidité.

9. Porte de véhicule à parois multiples selon l'une des revendications 1 à 7, caractérisée en ce que le support d'unités (5) peut être équipé d'unités (11,12), avant l'application de l'élément (22) formant écran contre l'humidité.
